Europäisches Patentamt

European Patent Office

Office européen des brevets

(19)

(11) Numéro de publication: **0 320 334**
**A1**

## (12) DEMANDE DE BREVET EUROPEEN

(21) Numéro de dépôt: **88402980.2**

(22) Date de dépôt: **25.11.88**

(51) Int. Cl.⁴: **B 32 B 25/08**
**B 29 C 59/10**

(30) Priorité: **26.11.87 FR 8716427**

(43) Date de publication de la demande:
**14.06.89 Bulletin 89/24**

(84) Etats contractants désignés:
**AT BE CH DE ES FR GB GR IT LI LU NL SE**

(71) Demandeur: **VALOIS Société Anonyme dite:**
**Boîte Postale G Le Prieuré**
**F-27110 Le Neubourg (FR)**

(72) Inventeur: **Lugez, Pierre**
**3, allée des Bleuets**
**F-27110 Le Neubourg (FR)**

(74) Mandataire: **Pinguet, André**
**CAPRI 28 bis, avenue Mozart**
**F-75016 Paris (FR)**

(54) **Procédé de fabrication de joints souples résistant aux agents chimiques et joints ainsi obtenus.**

(57) Afin de fabriquer un joint d'étanchéité pour récipients contenant des produits chimiques agressifs, il est connu de revêtir du caoutchouc par un film de PTFE ou en matière plastique. Toutefois, la bonne tenue du film sur le caoutchouc n'a jusqu'ici été obtenue qu'au prix de l'application d'une colle intermédiaire.

Le présent procédé parvient à faire adhérer directement un film de PTFE sur une couche de caoutchouc en traitant une face de ce film par effet Corona, en l'appliquant sur le caoutchouc cru par laminage et en vulcanisant le bicouche ainsi réalisé.

EP 0 320 334 A1

**Description**

# PROCEDE DE FABRICATION DE JOINTS SOUPLES RESISTANT AUX AGENTS CHIMIQUES ET JOINTS AINSI OBTENUS

La présente invention a pour objet un procédé de fabrication de joints souples pour fermeture de récipients, ainsi qu'un joint obtenu conformément à ce procédé. L'invention trouve une application intéressante, mais non limitative, aux joints de valves et de vaporisateurs.

On sait que, pour obtenir une bonne étanchéité entre un récipient et son couvercle, il faut un joint ayant une certaine souplesse, et bien entendu, une résistance chimique au produit qui doit être contenu dans le récipient. Pour obtenir cette souplesse, on utilise généralement du caoutchouc. Il existe de nombreuses formules de caoutchoucs, naturels et synthétiques, présentant différentes duretés, et différentes qualités de résistance chimique. Cependant, il existe de nombreux produits, notamment parmi les parfums et les médicaments, qui attaquent ou dissolvent tous les caoutchoucs : le joint perd son étanchéité, et le produit contenu peut être pollué ou dégradé d'une façon inacceptable.

Il existe d'autres matériaux souples résistant bien au contact avec les produits utilisés en parfumerie, pharmacie, et autres industries chimiques, notamment les matières plastiques synthétiques souples connues par exemple sous les marques Nylon et Téflon (PTFE). Mais la souplesse de ces produits n'est pas suffisante pour permettre d'obtenir l'étanchéité désirée. Aussi a-t-on pensé à combiner ces produits, par exemple en revêtant un joint de caoutchouc avec une mince couche de Téflon.

Dans cet ordre d'idées, la demande de brevet allemand DE 2 647 524 déposée en 1976 par la société japonaise DAIKIN KOGYO CO.Ltd. envisage de laminer un film de Téflon sur une feuille de caoutchouc, puis de vulcaniser l'ensemble. Comme le souligne cette publication ancienne, cette méthode se heurte toutefois à une difficulté pratique : les films de Téflon courants n'adhèrent pas au caoutchouc. En vue d'obtenir l'adhérence souhaitée, l'expérience montre qu'il faut plutôt avoir recours à du Téflon rendu poreux par une méthode quelconque : frittage ou extrusion d'une poudre de PTFE dans un solvant approprié, tissage ou agglomération de fibres de PTFE ou encore séparation d'une mousse de PTFE. Cependant les joints ainsi réalisés demeurent relativement vulnérables aux attaques chimiques, car les produits agressifs peuvent s'infiltrer au travers des pores du film de Téflon jusqu'au caoutchouc. C'est pourquoi la même divulgation recommande d'interposer une couche de colle entre le caoutchouc et le film poreux en Téflon. Mais, bien évidemment, l'application de la colle intermédiaire représente une opération et donc un coût supplémentaires.

La présente invention a pour but de s'en affranchir et recherche donc une méthode pour faire adhérer directement au caoutchouc un film de Téflon qui présente une structure capable d'arrêter durablement les produits chimiques agressifs.

Cela est réalisé grâce à un procédé consistant à appliquer au moins un film de PTFE directement sur une feuille de caoutchouc cru et à soumettre ladite feuille de caoutchouc avec ledit film de PTFE à un échauffement et à une pression tels que ledit caoutchouc se vulcanise, caractérisé en ce que ledit film de PTFE est préalablement traité par effet Corona sur celle de ses deux faces venant en contact avec ladite feuille de caoutchouc.

Advantageusement ledit film de PTFE est appliqué par laminage sur ladite feuille de caoutchouc au moyen d'un système de tambours, ledit échauffement étant transmis par un des tambours dudit système de tambours et ladite pression étant exercée par une bande métallique passant autour desdits tambours de sorte que sa tension est réglable.

Selon un autre mode de réalisation du procédé de l'invention, deux films de PTFE sont appliqués sur ladite feuille de caoutchouc cru et subissent ledit échauffement et ladite pression en vue de la vulcanisation dudit caoutchouc, une des deux faces de chacun desdits films de PTFE étant traitée par effet Corona et venant en contact de part et d'autre de ladite feuille de caoutchouc.

Pour ce qui est du caoutchouc, il peut s'agir d'un caoutchouc synthétique comportant au moins un agent de réticulation pris dans l'ensemble des agents de réticulation formé par le soufre, le peroxyde organique, les oxydes métalliques, les résines, les autres produits vulcanisants. Le caoutchouc synthétique peut éventuellement être mélangé avec une charge composée par au moins une des substances prises dans le groupe de substances formé par le kaolin, la silice et les noirs de carbone.

Les joints d'étanchéité emboutis dans les multicouches obtenus par le procédé de l'invention ont une structure qui garantit leur efficacité. En effet, il est connu que le traitement par effet Corona d'un film de PTFE, c'est-à-dire le bombardement de sa surface par décharges à lueur, crée sur cette surface de nombreuses petites cavités en forme de cône (cf. l'article "New surface improvement technique for PTFE film" paru dans le volume 20, N° 187 de Japan Plastics Age de sept.-oct. 1982). L'expérience montre que cela suffit pour obtenir l'adhérence avec le caoutchouc. Point n'est donc besoin que le film de PTFE soit poreux dans sa masse. Et l'épaisseur de film que l'effet Corona a laissée intacte, est désormais à même d'arrêter la pénétration des produits chimiques agressifs jusqu'au caoutchouc.

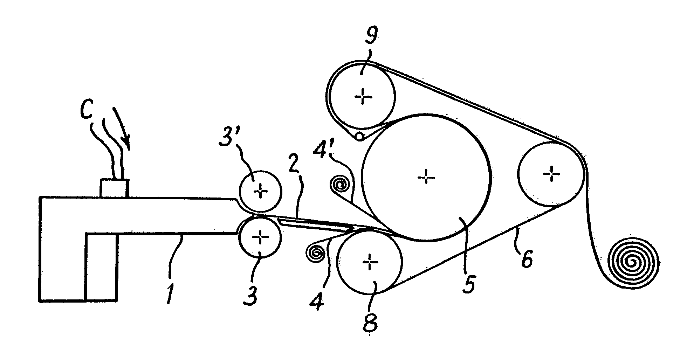

D'autres caractéristiques et avantages de l'invention apparaîtront à la lecture de la description qui va suivre donnée à titre d'exemple non limitatif, faite en relation avec le dessin annexé, et qui fera bien comprendre comment l'invention peut être réalisée.

La figure unique est une vue schématique d'une fabrication en continu d'une feuille du composite dans laquelle peuvent être découpés des joints selon l'invention.

Selon l'invention, un film plastique PTFE traité par effet Corona sur une face est appliqué, par la face traitée, sur une feuille de caoutchouc non vulcanisée. Puis l'ensemble est soumis à la vulcanisation, de façon connue, par chaleur et pression, par exemple à la presse, en continu ou par intermittence.

La figure unique du dessin ci-joint est une vue schématique d'une installation de vulcanisation en continu d'une feuille de caoutchouc. L'installation est modifiée, ou complétée pour placer, sur la feuille de caoutchouc, un film PTFE sur chaque face, la face de chaque film PTFE qui vient en application sur le caoutchouc ayant été préalablement traitée par effet Corona, de la façon connue.

Du caoutchouc C est introduit dans l'extrudeuse 1, et une feuille de caoutchouc non vulcanisé 2 sort entre les deux rouleaux 3 et 3'. La feuille 2 est introduite entre les deux films plastiques 4, 4', puis entre un tambour de vulcanisation 5 et une bande métallique souple 6. Le tambour 5 est chauffé convenablement, et la tension de la bande 6 assure la pression de vulcanisation. On a constaté que, dans ces conditions, le film PTFE traité par effet Corona adhérait sur le caoutchouc pendant la vulcanisation. Cependant, le collage du même film plastique, traité ou non par effet Corona, sur du caoutchouc vulcanisé ne donnait qu'une adhérence médiocre, alors que selon le procédé de l'invention, la feuille de PTFE est inarrachable.

Le résultat est particulièrement bon avec du caoutchouc synthétique vulcanisé avec un mélange comportant des agents de réticulation tel que du soufre et/ou un péroxyde organique et/ou des oxydes métalliques et/ou résines ou autre produit vulcanisant.. Advantageusement, le mélange de caoutchouc comporte des charges telles que le kaolin, la silice, noirs de carbone. L'adhérence du film plastique sur le caoutchouc est excellente. Les joints obtenus sont souples, permettent d'obtenir de bonnes étanchéités, et ils résistent bien aux agents chimiques.

Bien entendu, la présente invention n'est pas limitée a l'exemple qui vient d'être décrit ; elle est, au contraire, susceptible de variantes et de modifications qui apparaîtront à l'homme de l'art.

**Revendications**

1. Procédé de fabrication de joints souples et résistants aux agressions chimiques de produits fluides, ledit procédé consistant à appliquer au moins un film de PTFE directement sur une feuille de caoutchouc cru et à soumettre ladite feuille de caoutchouc avec ledit film de PTFE à un échauffement et à une pression tels que ledit caoutchouc se vulcanise, caractérisé en ce que ledit film de PTFE est préalablement traité par effet Corona sur celle de ses deux faces venant en contact avec ladite feuille de caoutchouc.

2. Procédé selon la revendication 1, caractérisé en ce que ledit film de PTFE est appliqué par laminage sur ladite feuille de caoutchouc au moyen d'un système de tambours, ledit échauffement étant transmis par un des tambours dudit système de tambours et ladite pression étant exercée par une bande métallique passant autour desdits tambours de sorte que sa tension est réglable.

3. Procédé selon la revendication 1 ou la revendication 2, caractérisé en ce que deux films de PTFE sont appliqués sur ladite feuille de caoutchouc cru et subissent ledit échauffement et ladite pression en vue de la vulcanisation dudit cacutchouc, une des deux faces de chacun desdits films de PTFE étant traitée par effet Corona et venant en contact de part et d'autre de ladite feuille de caoutchouc.

4. Procédé selon l'une quelconque des revendications précédentes, caractérisé en ce que ledit caoutchouc est un caoutchouc synthétique comportant au moins un agent de réticulation pris dans l'ensemble des agents de réticulation formé par le soufre, le péroxyde organique, les oxydes métalliques, les résines, les autres produits vulcanisants.

5. Procédé selon l'une quelconque des revendications précédentes, caractérisé en ce que ledit caoutchouc est un caoutchouc synthétique mélangé avec une charge composée par au moins une des substances prises dans le groupe de substances formé par le kaolin, la silice et les noirs de carbone.

6. Joint d'étanchéité obtenu selon le procédé d'une quelconque des revendications précédentes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | DE-A-2 647 524 (DAIKIN KOGYO CO., LTD) <br> * En entier, en particulier page 6, lignes 15-26; page 7 * <br> --- | 1-6 | B 32 B 25/08 <br> B 29 C 59/10 |
| Y,D | JAPAN PLASTIC AGE, vol. 20, no. 187, septembre-octobre 1982, pages 39-42, Tokyo, JP; S. YAMAMOTO et al.: "New surface improvement technique for PTFE film" <br> * En entier * <br> --- | 1-6 | |
| Y | FR-A-2 263 092 (MOLECULAR DESIGN INC.) <br> * En entier, en particulier, page 1, lignes 7-36; page 2, lignes 1-19; page 5, lignes 20-36; page 6, lignes 1-17 * <br> --- | 1-6 | |
| Y | FR-A-2 140 665 (MOLECULAR DESIGN INC.) <br> * En entier, en particulier page 1; page 2, lignes 1-27 * <br> --- | 1-6 | |
| Y | GB-A-1 110 079 (JOHNS-MANVILLE CORP.) <br> * Page 2, lignes 104-129; figure 4 * <br> --- | 2,3 | **DOMAINES TECHNIQUES RECHERCHES (Int. Cl.4)** |
| A | GB-A-1 080 649 (NATIONAL DISTILLERS AND CHEMICAL CORP.) <br> * En entier * <br> --- | 1 | B 29 C <br> B 32 B |
| A | DE-A-1 913 110 (PNEUMATIQUES, CAOUTCHOUC MANUFACTURE ET PLASTIQUES KLEBER-KOLOMBES S.A.) <br> * En entier * <br> --- | 1 | |
| A | PATENT ABSTRACTS OF JAPAN, vol. 10, no. 178 (C-355)[2234], 21 juin 1986, page 83 C 355; & JP-A-61 26 631 (TOKAI KOGYO K.K.) 05-02-1986 <br> * Résumé * <br> ---                    -/- | 1 | |

Le présent rapport a été établi pour toutes les revendications

| Lieu de la recherche | Date d'achèvement de la recherche | Examinateur |
|---|---|---|
| LA HAYE | 10-03-1989 | GOURIER P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 10, no. 56 (C-331)[2113], 6 mars 1986, page 46 C 331; & JP-A-60 197 740 (IDEMITSU SEKIYU KAGAKU K.K.) 07-10-1985 * Résumé * | 1 | |
| A | FR-A-2 092 966  (C.I.P.E.C.) * En entier * | 1 | |
| A | US-A-4 505 971  (T.O. MARTIN Jr.) * En entier * | 1 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| LA HAYE | 10-03-1989 | GOURIER P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)